# FASCICULE DE BREVET EUROPEEN

(11) **EP 1 919 279 B1**
(45) Date de publication et mention de la délivrance du brevet: **11.01.2017**
(21) Numéro de dépôt: 06794388.6
(22) Date de dépôt: 04.09.2006
(51) Int. Cl.: A01M 13/00, A01N 65/00, A01P 17/00, A01N 25/10

(54) **MATERIAU A LIBERATION PROGRESSIVE D'UNE SUBSTANCE ACTIVE LIQUIDE PAR EVAPORATION, ET BRACELET ANTI-MOUSTIQUE INTEGRANT UN TEL MATERIAU**
DURCH VERDUNSTUNG EINE FLÜSSIGE AKTIVE SUBSTANZ KONTROLLIERT FREISETZENDES MATERIAL UND DAS MATERIAL UMFASSENDES MÜCKEN ABWEISENDES ARMBAND
MATERIAL CONTROLLINGLY RELEASING A LIQUID ACTIVE SUBSTANCE BY EVAPORATION AND A MOSQUITO REPELLENT BRACELET COMPRISING SAID MATERIAL

(30) Priorité: 02.09.2005 FR 0508043
(43) Date de publication de la demande: 14.05.2008
(73) Titulaire: Evergreen Land Limited, Hong Kong (HK)
(72) Inventeur: GEORGES, Pascal, Serge, F-93130 Noisy Le Sec (FR)
(74) Mandataire: Sayettat, Julien Christian
(86) Numéro de dépôt international: PCT/FR2006/002033
(87) Numéro de publication internationale: WO 2007/026082

(56) Documents cités:
- EP-A2- 0 342 126
- EP-A2- 0 367 140
- WO-A-02/15692
- BE-A3- 1 014 125
- GB-A- 1 169 656
- GB-A- 1 359 136
- US-A- 3 630 446
- US-A- 3 661 838
- US-A- 4 047 505
- US-A- 4 734 281
- US-A- 4 752 477
- US-A- 4 809 912
- US-A- 5 145 675
- US-A- 5 688 509
- US-A- 6 159 489
- US-A1- 2001 028 126
- US-B1- 6 379 689
- BARNARD D R ET AL: "LABORATORY EVALUATION OF MOSQUITO REPELLENTS AGAINST AEDES ALBOPICTUS, CULEX NIGRIPALPUS, AND OCHLEROTATUS TRISERIATUS (DIPTERA: CULICIDAE)" JOURNAL OF MEDICAL ENTOMOLOGY, ENTOMOLOGY DEPT., B.P. BISHOP MUSEUM, HONOLULU,, US, vol. 41, no. 4, juillet 2004 (2004-07), pages 726-730, XP009063017 ISSN: 0022-2585
- TAWATSIN A ET AL: "REPELLENCY OF VOLATILE OILS FROM PLANTS AGAINST THREE MOSQUITO VECTORS" JOURNAL OF VECTOR ECOLOGY, THE SOCIETY, SANTA ANA, CA, US, vol. 26, no. 1, juin 2001 (2001-06), pages 76-82, XP001208373 ISSN: 1081-1710
- TRONGTOKIT Y ET AL: "COMPARATIVE REPELLENCY OF 38 ESSENTIAL OILS AGAINST MOSQUITO BITES" PHYTOTHERAPY RESEARCH, JOHN WILEY & SONS LTD. CHICHESTER, GB, vol. 19, no. 4, avril 2005 (2005-04), pages 303-309, XP009063016 ISSN: 0951-418X
- BARNARD D R: "REPELLENCY OF ESSENTIAL OILS TO MOSQUITOES (DIPTERA: CULICIDAE)" JOURNAL OF MEDICAL ENTOMOLOGY, ENTOMOLOGY DEPT., B.P. BISHOP MUSEUM, HONOLULU,, US, vol. 36, no. 5, septembre 1999 (1999-09), pages 625-629, XP009063018 ISSN: 0022-2585

## Description

L'invention concerne un matériau à libération progressive d'une substance active liquide par évaporation, un procédé de fabrication d'un tel matériau ainsi qu'un accessoire intégrant un élément en un tel matériau.

L'invention s'applique notamment, sans toutefois y être limitée, à un accessoire portable de type bracelet intégrant un élément présentant une fonction répulsive pour les moustiques.

Dans une telle application, le problème qui se pose est essentiellement celui de la durée de vie de l'accessoire. En effet, même si la substance active présente une bonne efficacité intrinsèque, sa libération présente une cinétique trop importante pour assurer son efficacité dans le temps.

US5688509 décrit des objets diffusant des répulsifs comme des huiles essentielles et comportant des agents spécifiques pour contrôler la diffusion de ceux-ci. EP0367140 décrit un répulsif qui s'évapore de façon contrôlée d'un polymère et enseigne que ceci ne peut être obtenu avec un homopolymère, mais mentionne des polymères de type EVA qui sont adaptés à un tel usage. US6379689 enseigne que la présence d'un composé peu volatil permet de réduire l'évaporation d'un autre composé volatil dans un article, p.ex. en polymère; le composé le plus volatil peut être un répulsif et la vanilline est un candidat peu volatil adapté.

L'invention vise notamment à résoudre ce problème en proposant un matériau dans lequel la cinétique de libération de la substance active est ralentie, et ce de façon contrôlée par incorporation d'un soluté en quantité paramétrable. Ainsi, l'invention fournit un accessoire dont la durée de vie et l'efficacité sont optimisées.

A cet effet et selon un premier aspect, l'invention propose un matériau selon la revendication 1.

Selon un deuxième aspect, l'invention propose un procédé de fabrication d'un tel matériau, dans lequel l'imprégnation est réalisée par mélange entre la matrice et la composition liquide.

Selon un troisième aspect, l'invention propose un accessoire comprenant un élément en un tel matériau, ledit élément faisant partie intégrante dudit accessoire.

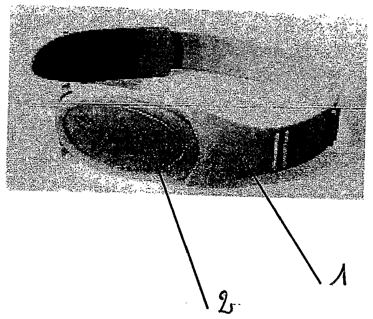

D'autres particularités et avantages de l'invention apparaîtront dans la description qui suit, faite en référence à la figure jointe représentant en perspective un bracelet selon un mode de réalisation.

En relation avec cette figure, on décrit un accessoire portable comprenant un bracelet 1 sur lequel un élément 2 en forme de plaquette est solidarisé. Comme on le verra dans la suite de la description, la plaquette est en matériau à libération progressive d'une substance active liquide par évaporation.

Le bracelet 1 est réalisé en matériau polymère et intègre deux pattes de solidarisation de la plaquette qui sont prévues de part et d'autre de celle-ci pour envelopper une partie de ses bords. Cette réalisation présente l'avantage de la simplicité de fabrication, notamment par moulage d'une seule pièce du bracelet 1, la plaquette 2 pouvant être ensuite introduite entre les pattes par déformation locale de celles-ci.

Selon une autre réalisation, la plaquette 2 peut être solidarisée par surmoulage dans le bracelet 1.

Dans ces réalisations, la plaquette 2 étant disposée sur le bracelet 1, il n'existe pas de contact direct entre le matériau de la plaquette 2 et la peau de la personne qui porte ledit bracelet, de sorte à éviter notamment une éventuelle réaction allergique cutanée.

Bien que la description soit faite en relation avec ce bracelet 1 particulier, l'invention n'est nullement limitée à cette configuration, ni à un bracelet, ni à un accessoire destiné à être porté contre la peau. En effet, tout type d'accessoire portable est envisageable, que celui-ci soit portable par un humain ou par un animal. Il est également possible de réaliser des accessoires qui ne sont pas destinés spécifiquement à être portés, par exemple des accessoires qui peuvent être posés ou fixés sur un meuble ou encore suspendus. En particulier, l'accessoire peut comprendre de façon générale une structure porteuse sur laquelle un élément en matériau à libération est solidarisé pour faire partie intégrante dudit accessoire.

Le matériau à libération comprend une matrice en matériau polymère dans laquelle une composition liquide est imprégnée. La composition comprend un mélange entre la substance active à libérer et un soluté. Le soluté est apte à diminuer la cinétique d'évaporation de la substance active par diminution de sa pression de vapeur.

Selon une réalisation la matrice comprend une résine copolymère éthylène-acétate de vinyle (EVA), notamment comprenant une quantité importante de groupement acétate de vinyle. Par exemple, la résine comprend entre 18% et 42 % en poids de groupement acétate de vinyle. L'utilisation d'une résine commercialisée par la société ARKEMA sous la dénomination EVATANE® donne de bons résultats relativement à la cinétique de libération de la substance active.

La matrice polymère peut comprendre, éventuellement en outre de la résine mentionnée ci-dessus, une résine à base de polypropylène (PP). Dans le cas d'une utilisation conjointe, un ratio pondéral d'environ 2 EVA pour 1 PP donne de bons résultats dans le cadre de l'invention.

En particulier, la substance active présente une fonction répulsive pour des animaux nuisibles, notamment pour les moustiques.

Pour ce faire, la substance active comprend une huile essentielle ou un mélange d'huiles essentielles, notamment en étant choisie dans le groupe comprenant l'huile essentielle de citronnelle, l'huile essentielle de lavandin, l'huile essentielle de géranium, l'huile essentielle de térébenthine, l'huile essentielle de clou de girofle, l'huile essentielle de menthe poivrée, l'huile essentielle de patchouli. Dans un exemple de réalisation, la substance active comprend un mélange de l'ensemble des huiles essentielles mentionnées ci-dessus, dans des proportions pondérales décroissantes par ordre de citation.

Des essais ont été menés et ont montrés l'efficacité particulièrement de l'utilisation d'un soluté comprenant au moins une substance alimentaire pour diminuer la cinétique d'évaporation de la substance active.

Par ailleurs, la substance alimentaire est choisie parmi la vanilline ou un mélange de vanilline et de menthol carboxamide. Dans le cas de l'utilisation du mélange, un ratio pondéral entre le menthol carboxamide et la vanilline qui est compris entre 4/1 et 2/1 donne des résultats particulièrement intéressants.

Le matériau selon l'invention peut comprendre entre 20% et 80% en poids de composition liquide imprégnée, ladite composition pouvant comprendre entre 10% et 30% en poids de soluté. Toutefois, des matrices peuvent être imprégnées avec plus de 100% en poids de composition liquide, et des compositions comprenant une quantité de soluté différente peuvent être réalisées en fonction de l'application spécifique visée pour le matériau.

Par ailleurs, le matériau peut comprendre des adjuvants connus, tels que des colorants ou des agents de mise en forme.

Selon l'invention, il est possible de conserver une efficacité du matériau imprégné pendant un à deux mois, après ouverture de l'emballage. C'est-à-dire que la cinétique d'évaporation permet la libération progressive de la substance active pendant toute cette période. En outre, par ajustement de la formulation de la composition et/ou de la matrice, il est possible d'ajuster la durée de libération de la substance active en fonction de l'application spécifique visée. Concernant le procédé de réalisation du matériau décrit ci-dessus, l'imprégnation est réalisée par mélange entre la matrice et la composition liquide. Le mélange peut être réalisé sur une durée relativement longue, par exemple de plusieurs jours, de sorte à assurer une imprégnation optimale. En outre, le mélange peut être réalisé à température ambiante dans une enceinte fermée ou sous vide afin de mieux conserver l'efficacité de la composition.

Préalablement au mélange, la composition liquide est formée par dissolution du soluté dans la substance active. Par exemple, le soluté peut être sous la forme solide, notamment d'une poudre, et la substance active peut être chauffée modérément et agitée pour améliorer la dissolution du soluté.

Après mélange, le matériau imprégné peut être mis en forme, par exemple sous forme de plaquette comme représenté sur la figure, selon des techniques connues telles que l'injection ou l'extrusion sans contrainte particulière.

Ainsi, l'élément en matériau peut présenter toute forme souhaitée pour s'intégrer au mieux dans l'accessoire qui doit le comporter. En variante, l'accessoire peut être réalisé entièrement en matériau imprégné puisque celui-ci présente la cohésion mécanique conférée par la matrice. Il est également envisageable de surmouler le matériau imprégnée avec un matériau compatible de sorte à former un accessoire intégrant ce surmoulage.

## Revendications

1. Matériau à libération progressive d'une substance active liquide par évaporation, ledit matériau comprenant une matrice en matériau polymère dans laquelle une composition liquide est imprégnée, ledit matériau étant **caractérisé en ce que** la composition comprend un mélange entre la substance active et un soluté, ladite substance active comprenant une huile essentielle ou un mélange d'huiles essentielles qui présente une fonction répulsive pour des animaux nuisibles, ledit soluté comprenant au moins une substance alimentaire choisie parmi la vanilline ou un mélange de vanilline et de menthol carboxamide et étant apte à diminuer la cinétique d'évaporation de la substance active par diminution de la pression de vapeur.

2. Matériau selon la revendication 1, **caractérisé en ce que** la matrice comprend une résine copolymère éthylène-acétate de vinyle (EVA).

3. Matériau selon la revendication 2, **caractérisé en ce que** la résine comprend entre 18% et 42% en poids de groupement acétate de vinyle.

4. Matériau selon l'une quelconque des revendications 1 à 3, **caractérisé en ce que** la matrice comprend une résine à base de polypropylène.

5. Matériau selon l'une quelconque des revendications 1 à 4, **caractérisé en ce que** la substance active est choisie dans le groupe comprenant l'huile essentielle de citronnelle, l'huile essentielle de géranium, l'huile essentielle de lavandin, l'huile essentielle de térébenthine, l'huile essentielle de clou de girofle, l'huile essentielle de menthe poivrée, l'huile essentielle de patchouli.

6. Matériau selon l'une quelconque des revendications 1 à 5, **caractérisé en ce qu'**il comprend entre 20% et 80% en poids de composition liquide imprégnée.

7. Matériau selon l'une quelconque des revendications 1 à 6, **caractérisé en ce que** la composition liquide comprend entre 10% et 30% en poids de soluté.

8. Procédé de fabrication d'un matériau selon l'une quelconque des revendications 1 à 7, dans lequel l'imprégnation est réalisée par mélange entre la matrice et la composition liquide.

9. Procédé de fabrication selon la revendication 8, dans lequel, préalablement à l'imprégnation, la composition liquide est formée par dissolution du soluté dans la substance active.

10. Accessoire comprenant un élément en matériau selon l'une quelconque des revendications 1 à 7, ledit élément faisant partie intégrante dudit accessoire.

11. Accessoire selon la revendication 10, **caractérisé en ce qu'**il comprend une structure support sur laquelle l'élément est solidarisé.

12. Accessoire selon la revendication 11, **caractérisé en ce qu'**il comprend un bracelet sur lequel un élément en forme de plaquette est solidarisé, le matériau formant ledit élément présentant une fonction répulsive pour les moustiques.

## Patentansprüche

1. Material zur progressiven Freisetzung eines flüssigen Wirkstoffs durch Verdampfung, wobei das Material eine Matrix aus Polymermaterial umfasst, in der eine flüssige Zusammensetzung imprägniert ist, wobei das Material **dadurch gekennzeichnet ist, dass** die Zusammensetzung eine Mischung zwischen dem Wirkstoff und einem gelösten Stoff umfasst, wobei der Wirkstoff ein essenzielles Öl oder eine Mischung aus essenziellen Ölen umfasst, die eine abstoßende Wirkung für schädliche Tiere aufweist, wobei der gelöste Stoff mindestens ein Lebensmittel umfasst, ausgewählt aus Vanillin oder einer Mischung aus Vanillin und Mentholcarboxamid und ausgelegt ist, um die Verdampfungskinetik des Wirkstoffs durch Verringerung des Dampfdrucks zu verringern.

2. Material nach Anspruch 1, **dadurch gekennzeichnet, dass** die Matrix ein Ethylen-Vinylacetat (EVA)-Copolymerharz umfasst.

3. Material nach Anspruch 2, **dadurch gekennzeichnet, dass** das Harz zwischen 18 Gew% und 42 Gew% Vinylacetat-Gruppe umfasst.

4. Material nach einem der Ansprüche 1 bis 3, **dadurch gekennzeichnet, dass** die Matrix ein Harz auf der Grundlage von Polypropylen umfasst.

5. Material nach einem der Ansprüche 1 bis 4, **dadurch gekennzeichnet, dass** der Wirkstoff ausgewählt ist aus der Gruppe, bestehend aus essenziellem Zitronellenöl, essenziellem Geranienöl, essenziellem Lavandinöl, essenziellem Terpentinöl, essenziellem Gewürznelkenöl, essenziellem Pfefferminzöl, essenziellem Patschuliöl.

6. Material nach einem der Ansprüche 1 bis 5, **dadurch gekennzeichnet, dass** es zwischen 20 Gew% und 80 Gew% imprägnierter flüssiger Zusammensetzung umfasst.

7. Material nach einem der Ansprüche 1 bis 6, **dadurch gekennzeichnet, dass** die flüssige Zusammensetzung zwischen 10 Gew% und 30 Gew% gelösten Stoff umfasst.

8. Verfahren zur Herstellung eines Materials nach einem der Ansprüche 1 bis 7, wobei die Imprägnierung durch Mischung zwischen der Matrix und der flüssigen Zusammensetzung durchgeführt wird.

9. Verfahren zur Herstellung nach Anspruch 8, wobei vor der Imprägnierung die flüssige Zusammensetzung durch Lösen des gelösten Stoffs im Wirkstoff gebildet wird.

10. Zubehör, umfassend ein Element aus Material nach einem der Ansprüche 1 bis 7, wobei das Element wesentlicher Bestandteil des Zubehörs ist.

11. Zubehör nach Anspruch 10, **dadurch gekennzeichnet, dass** es eine Stützstruktur umfasst, auf der das Element fest verbunden ist.

12. Zubehör nach Anspruch 11, **dadurch gekennzeichnet, dass** es ein Armband umfasst, auf dem ein Element in Form einer Platte fest verbunden ist, wobei das Material, das das Element bildet, eine abstoßende Wirkung für Stechmücken aufweist.

## Claims

1. Material that progressively liberates a liquid active substance by evaporation, said material comprising a matrix of polymer material in which a liquid composition is impregnated, said material being **characterised in that** the composition comprises a mixture of the active substance and a solution, said active substance comprising an essential oil or a mixture of essential oils which has a repellent function for pests, said solution comprising at least one food substance chosen from vanillin or a mixture of vanillin and menthol carboxamide and being capable of reducing the evaporation kinetics of the active substance by reducing the vapour pressure.

2. Material according to claim 1, **characterised in that** the matrix comprises a ethylene-vinyl acetate copolymer resin (EVA).

3. Material according to claim 2, **characterised in that** the resin comprises between 18% and 42% in weight of vinyl acetate grouping.

4. Material according to any of claims 1 to 3, **characterised in that** the matrix comprises a polypropylene based resin.

5. Material according to any of claims 1 to 4, **characterised in that** the active substance is chosen in the group comprising citronella essential oil, geranium essential oil, hybrid lavender essential oil, turpentine essential oil, clove essential oil, peppermint essential oil, patchouli essential oil.

6. Material according to any of claims 1 to 5, **characterised in that** it comprises between 20% and 80% in weight of impregnated liquid composition.

7. Material according to any of claims 1 to 6, **characterised in that** the liquid composition comprises between 10% and 30% in weight of solution.

8. Manufacturing process of a material according to any of claims 1 to 7, in which the impregnation is carried out by mixing the matrix and the liquid composition.

9. Manufacturing process according to claim 8, in which, prior to impregnation, the liquid composition is formed by dissolution of the solution in the active substance.

10. Accessory comprising a material element according to any of claims 1 to 7, said element being an integral part of said accessory.

11. Accessory according to claim 10, **characterised in that** it comprises a support structure onto which the element is attached.

12. Accessory according to claim 11, **characterised in that** it comprises a bracelet onto which an element in the form of a plate is attached, the material forming said element having a repellent function for mosquitoes.
